(19) Europäisches Patentamt

European Patent Office

Office européen des brevets

(11) EP 1 065 223 A1

## (12) EUROPEAN PATENT APPLICATION
published in accordance with Art. 158(3) EPC

(43) Date of publication:
03.01.2001 Bulletin 2001/01

(51) Int. Cl.$^7$: **C08F 14/26**, C08F 2/24, C08J 3/16, C08J 9/00

(21) Application number: 99906513.9

(22) Date of filing: 26.02.1999

(86) International application number:
PCT/JP99/00930

(87) International publication number:
WO 99/43723 (02.09.1999 Gazette 1999/35)

(84) Designated Contracting States:
DE FR GB IT

(30) Priority: 27.02.1998 JP 4809298

(71) Applicant:
ASAHI GLASS COMPANY LTD.
Tokyo 100-8405 (JP)

(72) Inventors:
• KAMIYA, Hiroki,
Asahi Glass Company Ltd.
Yokohama-shi, Kanagawa 221-0863 (JP)

• KASHIWAGI, Kimiaki,
Asahi Glass Company Ltd.
Yokohama-shi, Kanagawa 221-0863 (JP)

(74) Representative:
Müller-Boré & Partner
Patentanwälte
Grafinger Strasse 2
81671 München (DE)

(54) **PROCESS FOR PRODUCING AQUEOUS DISPERSION CONTAINING POLYTETRAFLUOROETHYLENE**

(57) An aqueous dispersion of a polytetrafluoroethylene (PTFE) is produced by using e.g. $C_9F_{19}COONH_4$ as a surfactant. A PTFE fine powder obtained by coagulating this aqueous dispersion, is subjected to paste extrusion and stretched at a temperature of at least 250°C to obtain the porous article.

EP 1 065 223 A1

Printed by Xerox (UK) Business Services
2.16.7 (HRS)/3.6

## Description

## TECHNICAL FIELD

The present invention relates to a method for producing an aqueous dispersion containing tetrafluoroethylene (hereinafter referred to as TFE). Further, it relates to a polytetrafluoroethylene (hereinafter referred to as PTFE) fine powder which gives a stretched porous article having excellent uniformity and strength by secondary processing, and a stretched porous article obtained by using such a fine powder.

## BACKGROUND ART

A PTFE fine powder can be obtained usually by coagulation from an aqueous dispersion produced by a so-called emulsion polymerization wherein TFE is polymerized in an aqueous medium by means of a surfactant. Further, as a surfactant, it is common to employ ammonium perfluorooctanoate which is excellent in the stability of the dispersed particles during the polymerization.

It is known that a fine powder obtained by coagulating the dispersed particles is formed into a molded product such as a tube, a rod or a film by a paste extrusion molding method wherein it is extruded together with a suitable auxiliary agent such as liquid paraffin, naphtha or white oil, and such a molded product is subjected to stretching at a high temperature to obtain a stretched porous article.

However, the stretched porous article obtainable from a PTFE fine powder produced by means of the above-mentioned surfactant, has a problem that it is inferior in e.g. mechanical properties and uniform appearance.

## DISCLOSURE OF THE INVENTION

The present invention provides a fine powder to obtain a stretched porous article having excellent characteristics by secondary processing, and provides a stretched porous article having high strength and uniformity, thereby obtained.

The present inventors have found that the characteristic, particularly the uniformity, of a porous article obtainable by secondary processing can be improved by the production by means of a surfactant, particularly a hydrophobic surfactant, at the time of aqueous dispersion polymerization of TFE.

Namely, the present invention provides a method for producing an aqueous dispersion containing a polytetrafluoroethylene, which is characterized by polymerizing tetrafluoroethylene in an aqueous medium in which at least one surfactant selected from compounds represented by the formula 1 or 2 (wherein n is an integer of from 8 to 11, m is an integer of from 0 to 2, X is -COOM or -SO$_3$M, and Y is -COOM, wherein M is an alkali metal ion or an ammonium ion) is present:

$$C_nF_{2n+1}X \qquad \text{Formula 1}$$

$$C_3F_7O(CF(CF_3)CF_2O)_mCF(CF_3)Y \quad \text{Formula 2}$$

Further, it provides a powdery PTFE fine powder obtained by coagulating PTFE in the aqueous dispersion produced by the above method.

Further, it provides a porous article obtained by subjecting the above fine powder to paste extrusion, followed by stretching at a temperature of at least 250°C.

## BEST MODE FOR CARRYING OUT THE INVENTION

In the present invention, it is important that a compound represented by the formula 1 (hereinafter referred to also as surfactant (formula 1)) or a compound represented by the formula (2) (hereinafter referred to also as surfactant (formula 2)) is present as a surfactant.

In surfactant (formula 1), n represents the chain length of the perfluoroalkyl group and is an integer of from 8 to 11, particularly preferably 9. If n is 12 or more, the solubility in water as a surfactant tends to be low, and the surface active effect tends to be low, whereby an aqueous dispersion can not be obtained. A surfactant wherein n is 7 is used for usual TFE polymerization, but a compound wherein n is lower than 7 is inferior to the surfactant in the present invention, particularly with respect to the uniformity of the stretched porous article of PTFE. Further, the perfluoroalkyl group may be straight-chained or branched.

X is a hydrophilic moiety of surfactant (formula 1) and is -COOM or -SO$_3$M, wherein M is an alkali metal ion such as sodium, potassium or lithium, or an ammonium ion, preferably an ammonium ion. As surfactant (formula 1), C$_9$F$_{19}$COONH$_4$ is particularly preferred.

In surfactant (formula 2) of the present invention, m is 0, 1 or 2, preferably 1. If m is 3 or more, the solubility in water tends to be low, and the surface active effect tends to be low, whereby an aqueous dispersion can not be obtained.

Y is a hydrophilic moiety of surfactant (formula 2) and is -COOM, wherein M is an alkali metal ion such as sodium, potassium or lithium, or an ammonium ion, preferably an ammonium ion. As surfactant (formula 2), C$_3$F$_7$OCF(CF$_3$)CF$_2$OCF(CF$_3$)COONH$_4$ is particularly preferred. Further, the C$_3$F$_7$ group is preferably straight chained.

Surfactant (formula 1) can be obtained by adding aqueous ammonia or an alkali metal hydroxide to C$_n$F$_{2n+1}$COOH (wherein n is an integer of from 8 to 11). Whereas, surfactant (formula 2) can be obtained by firstly synthesizing an oligomer such as a HFPO diner, a HFPO trimer or a HFPO tetramer in the presence of a metal fluoride such as KF, then, further hydrolyzing it to obtain a carboxylic acid, and then adding aqueous ammonia or an alkali metal hydroxide.

In the present invention, usually one member selected from surfactant (formula 1) and surfactant (formula 2) is used, but two or more members may be used in combination. In a case where two or more members are used in combination, they may be two or more members from surfactant (formula 1) or two or more members from surfactant (formula 2). Otherwise, they may be a combination of at least one member from surfactant (formula 1) and at least one member from surfactant (formula 2). Further, for the purpose of stabilizing the dispersed particles, a commonly employed surfactant other than surfactant (formula 1) and other than surfactant (formula 2), such as ammonium perfluorooctanoate, may be used in combination.

Usually, at the time of initiation of the polymerization, a surfactant is added in an amount of not more than the critical micelle concentration. In the present invention, not more than 0.2 wt% in a total amount of surfactant (formula 1) and surfactant (formula 2) will be added based on water to be used as an aqueous medium. If the amount is large, dispersed particles having a large aspect ratio will be formed, whereby the stability of the dispersed particles will be impaired. Further, it is preferred to incorporate at least 0.01 wt% in a total amount of surfactant (formula 1) and surfactant (formula 2) in order not to permit the polymerization rate decrease extremely.

As the polymerization proceeds, dispersed particle sizes will increase, whereby the dispersion tends to be unstable. Accordingly, from the viewpoint of supplementing the stability of the dispersion, the surfactant in the present invention may additionally be incorporated in the course of polymerization to such an extent not to induce formation of particles having a large aspect ratio. The additional amount may exceed 0.2 wt% in the total amount of surfactant (formula 1) and surfactant (formula 2). If the aspect ratio is extremely large, entangling among dispersed particles will take place, whereby the aqueous dispersion tends to be gelled, and it tends to be difficult to obtain a stable aqueous dispersion.

PTFE to be obtained by the present invention, may be produced by conventional aqueous dispersion polymerization. Usually, the polymerization is carried out at a polymerization temperature of from 50 to 120°C under a polymerization pressure of from 6 to 40 kg/cm$^2$G which is the pressure of TFE itself. As the initiator, a peroxide such as disuccinic acid peroxide or diglutaric acid peroxide, or a persulfate such as ammonium persulfate or potassium persulfate, may be used alone or in combination. Further, it may be used in combination with a reducing agent such as sodium sulfite in the form of a redox type.

Further, the radical concentration during the polymerizations may be adjusted by adding a radical capturing agent such as hydroquinone or catechol or by adding a peroxide-decomposing agent such as ammonium sulfite during the polymerization.

The polymerization is terminated usually when the formed PTFE dispersion concentration reaches from 20 to 40 wt%, by discharging TFE out of the system and terminating the stirring. Then, the aqueous dispersion of PTFE is withdrawn, and then the dispersed product is coagulated to separate and recover PTFE particles.

The coagulation can be carried out by a known method. For example, it is carried out by vigorous stirring after adjusting the PTFE dispersion concentration to from 10 to 20 wt% by dilution with water. In some cases, the pH may be adjusted, or a coagulation aid such as an electrolyte or a water-soluble organic solvent may be added. By carrying out suitable stirring, the dispersed product of PTFE is separated from water, whereby a fine powder of PTFE granulated and regulated, will be obtained.

Drying is carried out usually in a state where the coagulated wet powder is not fluidized very much, preferably by vacuum, high frequency waves or hot air while maintaining the standing still state. The fine powder has a nature such that it will easily be fibrillated even with a small shearing force to lose the state of the initial crystal structure after the termination of the polymerization. Especially in the application for stretch processing, in order to prevent deterioration of the processability, contact or friction among the powder particles one another especially at a high temperature is not usually advisable for a fine powder. The drying temperature is preferably from 10 to 250°C, particularly preferably from 100 to 250°C.

The stretched porous article can be produced by a usual method. Namely, from about 10 to 50 ml of a lubricating agent is added to 100 g of the PTFE fine powder, followed by mixing, and then the mixture is sufficiently aged in a closed container. The lubricating agent may, for example, be a petroleum type solvent such as solvent naphtha or white oil, a hydrocarbon type solvent such as a triol, a ketone or an ester, silicone oil, fluorine oil or a fluorine-containing compound, and it may be one capable of wetting the fine powder and capable of being easily evaporated and removed after extrusion.

The fine powder having the lubricant incorporated, is preliminarily molded under a pressure of from about 1 to 50 kg/cm$^2$ and then subjected to paste extrusion. In some cases, the extrusion molded product is formed into a sheet by e.g. calendering.

It is important to promote orientation of fine powder particles at the time of the extrusion, and it is preferred to take the extruder reduction ratio R/R (the area ratio of the barrel area to the extrusion die) sufficiently. Namely, it is preferred to carry out the extrusion at a ratio of R/R=50 to 800, particularly preferably R/R=80 to 200. Here, the pressure exerted to the paste i.e. the extrusion pressure, is usually from 100 to 1000 kg/cm$^2$. The smaller the extrusion pressure, the better the extrusion moldability. However, if it is too small, orientation of the fine powder particles tends to be inadequate, whereby the stretchability tends to deteriorate. From this viewpoint, R/R will be set.

Thereafter, the lubricant contained in the extrusion molded product is evaporated and removed, followed by stretching for from 2 to 50 times at a temperature of at least 250°C to obtain a preferred porous article. If the temperature is lower than 250°C, only a porous article having a small stretching ratio will be obtained, and if it exceeds 350°C, PTFE tends to fuse, whereby a porous article tends to be hardly obtainable.

Stretching of the extrusion molded product is preferably carried out uniformly. Here, uniformly means that the entire molded product is uniformly stretched, and specifically, it means that the weight distribution, the pore size distribution, etc. in the stretching direction of the porous article are uniform.

The stretch ratio is not particularly limited. However, if the stretch ratio is less than twice, the product will not be substantially porous, and if it exceeds 50 times, a stable porous structure will not be obtained, and in some cases, breakage or the like is likely to take place during the stretching. Accordingly, it is preferably from 2 to 50 times. Further, the stretching speed is also not limited, but it is usually carried out at from 50 to 1000%/sec.

Now, the present invention will be described in further detail with reference to Examples (Examples 1 to 4) and Comparative Example (Example 5), but it is not thereby limited. Further, the properties of the obtained polymers were measured by the following method.

(1) Standard specific gravity: The standard specific gravity of a powdery polymer was measured in accordance with ASTM D1457-69 method by the amount of water substituted by a standard molding test sample. This standard molded product is preliminarily molded by maintaining 12.0 g of a molding powder under a pressure of 352 kg/cm$^2$ for 2 minutes in a mold having a diameter of 2.86 cm. Then, this molded product was heated in an oven at a rate of 2°C/mm from 300°C to 380°C, then maintained at 380°C for 30 minutes, then cooled to 294°C at a rate of 1°C/min and then taken out from the oven and maintained at 23°C for at least 3 hours, whereupon it was used as a sample for measurement.

Further, the production and evaluation of the uniformity of the stretched porous article were carried out in accordance with the following method.

(2) Preparation of a sample for evaluation of stretch processability: 50 g of a fine powder and 11.8 ml of an extrusion lubricant (Supersol FP25, manufactured by Idemitsu Petrochemical) as a hydrocarbon oil were mixed and aged at 25°C for at least 1 hour.

Then, the above mixture was filled in an extrusion die (having an orifice with an inner diameter of 1 mm and a drawing angle of 30) provided with a cylinder (inner diameter: 9.95 mm), and a load of 20 kg was exerted to a piston inserted to the cylinder and maintained for 10 minutes. Thereafter, it was extruded at a ram speed of 100 mm/min to obtain a rod-shaped product. An extruded product at a portion where the pressure was in an equilibrium state in the latter half of the extrusion, was put into an oven, and the lubricant was evaporated and removed at 180°C. This product was cut in a length of about 50 mm and used as a sample for stretch processing.

(3) Preparation of a stretched porous article: The above sample was stretched by means of a tensile tester provided with a constant temperature tank with a distance between chucks of 10 mm, at a temperature of 250°C at a tensile speed of 200%/sec. to a length of ten times (100 mm).

(4) Evaluation of uniformity of the porous article: Marking was applied to the center of the sample before stretching (10 mm between the chucks), and then stretching was carried out. After the stretching, the distance (L) mm of the displacement from the position of the center (50 mm from the chuck) of the sample (100 mm) to the marking position, was measured and used as an index for the uniformity (%) by the following formula. The larger the value, the higher the uniformity.

$$\text{Uniformity (\%)} = ((100/2 - L)/(100/2)) \times 100$$

(5) Measurement of the strength of the stretched rods: The strengths at break of five stretched rods were measured, and the average value was taken as the strength at break (kg) per stretched rod.

EXAMPLE 1

49 g of perfluorodecanoic acid ($C_9F_{19}COOH$) purified by recrystallization by means of chloroform, was added and suspended in 140 ml of deionized water. 7.1 g of 29% aqueous ammonia was added thereto for conversion to an ammonium salt, and then water and excess ammonia were distilled off to obtain 50 g of ammonium perfluorodecanoate ($C_9F_{19}COONH_4$) as white solid.

634 g of deionized water, 0.435 g of ammonium perfluorodecanoate and 7.9 g of paraffin wax was were charged into a 1000 ml autoclave equipped with a stirrer, and the interior was substituted by TFE. The internal temperature was adjusted to 65°C, and the pressure was raised to 16 kg/cm$^2$G with TFE. 10 ml of a 0.5 wt% disuccinic acid peroxide aqueous solution was injected under pressure to initiate the polymerization. While introducing TFE so as to maintain the internal pressure, polymerization was continued. When 70 g of TFE was added, 0.791 g of ammonium perfluorodecanoate was dissolved in 15 ml of water and injected under pressure, whereupon the polymerization was continued. When 250 g of TFE was added, TFE was purged, and the autoclave was cooled to terminate the polymerization. The solid concentration of the obtained aqueous dispersion was 26.0 wt%. The aqueous dispersion was diluted with water so that the solid concentration became about 10 wt%, and then the above-mentioned aqueous dispersed polymer was coagulated by mechanical stirring, water was filtered off, followed by drying at 180°C for 7 hours to obtain a PTFE fine powder. The standard specific gravity of the obtained PTFE was 2.172. Using this PTFE fine powder, molding was carried out based on the above-described method, and the uniformity and the strength at break were evaluated, whereby the uniformity index was 94%, and the strength at break was 0.553 kg.

EXAMPLE 2

An oligomer composed of HFPO trimer was obtained in the presence of potassium fluoride and then hydrolyzed to obtain a carboxylic acid. To 95 g of this carboxylic acid, 16.8 g of 29% aqueous ammonia was added for conversion to an ammonium salt. Then, water and excess ammonia were distilled off to obtain 96 g of $F(CF_2)_3OCF(CF_3)CF_2OCF(CF_3)COONH_4$ (hereinafter referred to surfactant 1) in a wax state.

Polymerization was carried out in the same manner as in Example 1 except that the surfactant used for the initial charging was changed to 0.421 g of surfactant 1, and the surfactant added at the time of addition of 70 g of TFE, was also changed to 0.771 g of surfactant 1. The solid concentration of the obtained aqueous dispersion was 26.7 wt%.

From the above aqueous dispersion, a PTFE fine powder was obtained in the same manner as in Example 1. The standard specific gravity of the obtained PTFE was 2.167. The uniformity index of this PTFE fine powder was 94%, and the strength at break was 0.501 kg.

EXAMPLE 3

Polymerization was carried out in the same manner as in Example 1 except that the surfactant used for the initial charging was changed to 0.435 g of ammonium perfluorodecanoate and the surfactant added at the time of addition of 70 g of TFE was changed to 0.644 g of ammonium perfluorooctanoate $(C_7F_{15}COONH_4)$. The solid concentration of the obtained aqueous dispersion was 27.8 wt%.

From the above aqueous dispersion, a PTFE fine powder was obtained in the same manner as in Example 1. The standard specific gravity of the obtained PTFE was 2.168. The uniformity index of this PTFE fine powder was 87%.

EXAMPLE 4

Polymerization was carried out in the same manner as in Example 1 except that the surfactant used for the initial charging was changed to 0.478 g of ammonium perfluorododecanoate $(C_{11}F_{23}COONH_4)$ and the surfactant added at the time of the addition of 70 g of TFE was changed to 0.644 g of ammonium perfluorooctanoate. The ammonium perfluorododecanoate has high hydrophobicity, and in order not to impair the stability of the PTFE dispersion, polymerization was terminated when 160 g of TFE was added. The solid concentration of the obtained aqueous dispersion was 17.2 wt%.

From the above aqueous dispersion, a PTFE fine powder was obtained in the same manner as in Example 1. The standard specific gravity of the obtained PTFE was 2.163. The uniformity index of this PTFE fine powder was 89%, and the strength at break was 0.515 kg.

EXAMPLE 5

Polymerization was carried out in the same manner as in Example 1 except that the surfactant used for the initial charging was changed to 0.354 g of ammonium perfluorooctanoate, and the surfactant added at the time of the addition of 70 g of TFE was changed to 0.644 g of ammonium perfluorooctanoate. The solid concentration of the obtained aqueous dispersion was 27.9 wt%.

From the above aqueous dispersion, a PTFE fine powder was obtained in the same manner as in Example 1. The standard specific gravity of the obtained PTFE was 2.164. The uniformity index of this PTFE fine powder was 67%, and the strength at break was 0.430 kg.

The PTFE fine powder obtained by the method of the present invention will give a porous article having high strength and uniformity by stretch processing.

INDUSTRIAL APPLICABILITY

The PTFE aqueous dispersion obtained by the present invention is useful as a starting material for a coating material and useful for coating on rolls and kitchen utensils and for dip processing of glass cloths. Further, the fine powder of the present invention is useful as a starting material for paste extrusion molding other than the production of a stretched porous article. In particular, the processed stretched porous article is excellent in uniformity and strength and is useful for water resistant clothings or industrial products such as bag filters, packings, gaskets or for other coating applications.

**Claims**

1. A method for producing an aqueous dispersion containing a polytetrafluoroethylene, which is characterized by polymerizing tetrafluoroethylene in an aqueous medium in which at least one surfactant selected from compounds represented by the formula 1 or 2 (wherein n is an integer of from 8 to 11, m is an integer of from 0 to 2, X is -COOM or -$SO_3M$, and Y is -COOM, wherein M is an alkali metal ion or an ammonium ion) is present:

$$C_nF_{2n+1}X \qquad \text{Formula 1}$$

$$C_3F_7O(CF(CF_3)CF_2O)_mCF(CF_3)Y \quad \text{Formula 2}$$

2. The method according to Claim 1, wherein the surfactant is $C_9F_{19}COONH_4$ or $C_3F_7OCF(CF_3)CF_2OCF(CF_3)COONH_4$.

3. A powdery polytetrafluoroethylene fine powder obtained by coagulating the polytetrafluoroethylene in the aqueous dispersion produced by the method defined in Claim 1 or 2.

4. A porous article obtained by subjecting the fine powder as defined in Claim 3 to paste extrusion molding and then stretching the molded product at a temperature of at least 250°C.

# INTERNATIONAL SEARCH REPORT

| | International application No. |
|---|---|
| | PCT/JP99/00930 |

**A. CLASSIFICATION OF SUBJECT MATTER**
Int.Cl⁶ C08F14/26, C08F2/24, C08J3/16, C08J9/00

According to International Patent Classification (IPC) or to both national classification and IPC

**B. FIELDS SEARCHED**

Minimum documentation searched (classification system followed by classification symbols)
Int.Cl⁶ C08F14/26, C08F2/24, C08J3/16, C08J9/00, C08L27/18

Documentation searched other than minimum documentation to the extent that such documents are included in the fields searched

Electronic data base consulted during the international search (name of data base and, where practicable, search terms used)
CAS on-line

**C. DOCUMENTS CONSIDERED TO BE RELEVANT**

| Category* | Citation of document, with indication, where appropriate, of the relevant passages | Relevant to claim No. |
|---|---|---|
| X | JP, 05-148312, A (Imperial Chemical Industries PLC.), 2 August, 1991 (02. 08. 91), Claims ; column 4, lines 11 to 14 ; column 5, lines 19 to 26 | 1-3 |
| Y | Claims ; column 5, lines 19 to 26 & US, 5180803, A & EP, 469759, A1 | 4 |
| X | JP, 61-228008, A (E.I. Du Pont de Nemours & Co.), 5 February, 1986 (05. 02. 86), Claims & EP, 191605, A1 | 1 |
| Y | JP, 07-290551, A (Toray Industries,Inc.), 26 April, 1994 (26. 04. 94), Claims ; column 2, line 33 to column 3, line 6 (Family: none) | 1-4 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 27 April, 1999 (27. 04. 99) | 18 May, 1999 (18. 05. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)

# INTERNATIONAL SEARCH REPORT

International application No.

PCT/JP99/00930

| C (Continuation). DOCUMENTS CONSIDERED TO BE RELEVANT | | |
|---|---|---|
| Category* | Citation of document, with indication, where appropriate, of the relevant passages | Relevant to claim No. |
| X<br>Y | JP, 06-184244, A (Asahi Glass Co., Ltd.),<br>18 December, 1994 (18. 12. 94),<br>Column 2, lines 23 to 33<br>Column 2, lines 23 to 33 (Family: none) | 1<br>2-4 |

Form PCT/ISA/210 (continuation of second sheet) (July 1992)